# EUROPÄISCHE PATENTSCHRIFT

(11) **EP 2 830 780 B1**
(45) Veröffentlichungstag und Bekanntmachung des Hinweises auf die Patenterteilung: **18.05.2016**
(21) Anmeldenummer: 13710294.3
(22) Anmeldetag: 09.03.2013
(51) Int. Cl.: B05C 3/10, B65G 49/04, B05C 13/02

(54) **ANLAGE ZUR TAUCHBEHANDLUNG VON GEGENSTÄNDEN**
INSTALLATION FOR DIP COATING ARTICLES
INSTALLATION DE TRAITEMENT PAR IMMERSION D'OBJETS

(30) Priorität: 31.03.2012 DE 102012006630
(43) Veröffentlichungstag der Anmeldung: 04.02.2015
(73) Patentinhaber: Eisenmann SE, 71032 Böblingen (DE)
(72) Erfinder: KATEFIDIS, Apostolos, 71116 Gärtringen (DE)
(74) Vertreter: Ostertag, Ulrich
(86) Internationale Anmeldenummer: PCT/EP2013/000704
(87) Internationale Veröffentlichungsnummer: WO 2013/143654

(56) Entgegenhaltungen:
- DE-A1- 10 333 146
- DE-A1-102008 026 317
- DE-C1- 4 304 145
- DE-U1- 29 724 558

## Beschreibung

Die Erfindung betrifft eine Anlage zur Tauchbehandlung von Gegenständen, insbesondere von Fahrzeugkarosserien, mit
a) mindestens einem Tauchbecken, das bis zu einem bestimmten Spiegel mit einer Behandlungsflüssigkeit befüllbar ist;
b) einem Trarisportsystem, welches die Gegenstände an das Tauchbecken heran und von diesem wegbewegt;
c) mindestens einer stationären Drehstation, die an dem Tauchbecken vorgesehen ist und eine Drehplattform aufweist, auf welcher jeweils mindestens ein Gegenstand befestigbar ist und die von einer ersten Position, in welcher sich der Gegenstand oberhalb des Spiegels der Behandlungsflüssigkeit befindet, in eine zweite Position, in welcher sich der Gegenstand unterhalb des Spiegels der Behandlungsflüssigkeit befindet, und/oder in der Gegenrichtung zwischen diesen beiden Positionen verdrehbar ist;
   wobei
d) jeder Gegenstand auf einem Skid befestigbar ist, der mit dem Transportsystem zusammenwirkt und auf der Drehplattform der Drehstation festlegbar ist, wobei der Skid ein Grundgerüst und eine Befestigungseinrichtung für den Gegenstand aufweist.

Unter einer "stationären" Drehstation wird hier eine solche verstanden, die einem Tauchbecken zugeordnet ist und sich nicht zusammen mit dem zu behandelnden Gegenstand durch die gesamte Anlage bewegt. Sie kann jedoch im Einzelfalle entlang eines Tauchbeckens über eine gewisse Strecke hin und her bewegt werden.

Anlagen der oben genannten Art sind beispielsweise in der DE 43.04 145 C1 oder der EP 0 749 395 B1 beschrieben. Dort sind die eingesetzten Skids im Wesentlichen in sich starre Gebilde, bei denen die aufgesetzte Fahrzeugkarosserie sich gegenüber dem Grundgerüst nicht bewegen kann. Die Plattformen der Drehstationen, auf welche die Skids mit den Fahrzeugkarosserien aufgesetzt werden, sind über verhältnismäßig lange Lenker mit der Drehachse der jeweiligen Drehstation verbunden. Dies ist notwendig, um die Fahrzeugkarosserien bei einer Drehung um 180° tatsächlich unter den Spiegel der Behandlungsflüssigkeit im Tauchbecken zu bringen, da sich die Drehachse selbst außerhalb der Behandlungsflüssigkeit befinden soll. Auf diese Weise ergibt sich eine verhältnismäßig große Höhe, auf der sich die Fahrzeugkarosserie innerhalb der Drehstation befindet, was sich in einem entsprechenden Höhenniveau der heran- und abführenden Transportsysteme niederschlägt. Eine solche Höhe ist jedoch insbesondere in vor- und nachgeschalteten Anlagenteilen nicht erwünscht, durch welche die Fahrzeugkarosserien auf denselben Skids geführt werden sollen.

Aufgabe der vorliegenden Erfindung ist es, eine Anlage der eingangs genannten Art derart auszugestalten, dass die Höhenposition der nicht eingetauchten Gegenstände auf der Drehstation möglichst niedrig ist.

Diese Aufgabe wird erfindungsgemäß dadurch gelöst, dass
e) die Befestigungseinrichtung eine Haltestruktur für den Gegenstand aufweist sowie mindestens zwei Schwingen, welche die Gestalt eines U oder V aufweisen und in ihrem Scheitel an der Haltestruktur verschwenkbar befestigt sind;
   wobei
f) beide Schenkel des U oder V ein Langloch aufweisen, in das jeweils ein an dem Skid befestigter Führungszapfen eingreift und bei einer Drehung des Skids in dem entsprechenden Langloch gleitet.

Erfindungsgemäß wird also das Konzept herkömmlicher Skids aufgegeben, die Fahrzeugkarosserie völlig starr und unbeweglich an dem Grundgerüst des Skids zu befestigen. Stattdessen wird dem Gegenstand die Freiheit gegeben, sich in ganz definierter Weise gegenüber dem Grundgerüst des Skids unter dem Einfluss der Schwerkraft, gegebenenfalls auch unter dem Einfluss eines aktiven Antriebs, bei der Drehbewegung in der Drehstation zu bewegen. Die Schwerkraft bzw. die Antriebseinrichtung sorgt dafür, dass der Gegenstand in der ausgetauchten Position, in der er sich oberhalb der Drehachse befindet, so nah wie möglich an das Grundgerüst des Skids heranrückt. Bei der Verdrehung der Drehplattform gewinnt jedoch der der Befestigungseinrichtung eingeräumte Freiheitsgrad an Bedeutung und lässt es zu, dass die Schwerkraft den Gegenstand von dem Grundgerüst wegzieht. Nach einer Drehung um 180°, nach welcher der Gegenstand gewissermaßen "auf dem Rücken" liegt, besitzt dieser dann den maximalen Abstand vom Grundgerüst und damit auch von der Drehachse.

Dies wird durch die erfindungsgemäße Ausgestaltung der die Haltestruktur mit dem Skid verbindenden Schwingen erreicht. In der "Normalposition" des Gegenstandes, in der dieser also nicht eingetaucht ist, öffnet sich das U oder V der Schwingen nach unten, wobei die durch den Scheitel der Schwingen gehende Symmetrieebene gegenüber der Vertikalen verkippt ist. Auf diese Weise ergibt sich eine stabile Ruheposition des Gegenstandes, da zum einen eine weitere Verschwenkung der Schwingen in der Richtung, in der die Schwerkraft wirkt, durch den zwischen einem Führungszapfen und einem Langloch gebildeten Anschlag verhindert wird, zum anderen die Bewegung in Gegenrichtung nur unter Kraftaufwand möglich ist, da hierzu die Haltestruktur mit der daran angebrachten Fahrzeugkarosserie angehoben werden muss.

Um die Höhe der Befestigungsstruktur in der ausgetauchten Position über dem Skid klein zu halten, sollten die Schwingen möglichst weit verschwenkt werden können, so dass ihre Scheitel nahe an dem Skid liegen.

In der eingetauchten Position weisen die Öffnungen des U bzw. V der Schwingen nach oben. Die durch die Scheitel und damit die Anlenkpunkte gehende Symmetrieebene der Schwingen steht im Wesentlichen senkrecht. Beide Führungszapfen schlagen am Ende der entsprechenden Langlöcher der Schwingen an, so dass die Haltestruktur mit dem Gegenstand durch jede Schwinge an zwei Stellen aufgehängt ist. Dies ergibt eine sehr stabile Lage des Gegenstandes in der eingetauchten Position.

Bei einer besonders bevorzugten Ausführungsform der Erfindung weist die Befestigungseinrichtung eine Dämpfungseinrichtung auf, welche die unter dem Einfluss der Schwerkraft stattfindende Bewegung des Gegenstandes gegenüber dem Grundgerüst des Skids bremst. Auf diese Weise lässt sich die Geschwindigkeit, mit welcher sich der Gegenstand gegenüber dem Grundgerüst unter dem Einfluss der Schwerkraft bewegt, auf das gewünschte Maß begrenzen.

Ein Ausführungsbeispiel der Erfindung wird nachfolgend anhand der Zeichnung näher erläutert; es zeigen
- Figur 1: in der Seitenansicht einen Ausschnitt aus einer Anlage zur kataphoretischen Tauchlackierung von Fahrzeugkarosserien;
- Figur 2: in der Seitenansicht und in größerem Maßstab eine Fahrzeugkarosserie, befestigt auf einem Skid, wie dieser bei der Anlage der Figur 1 eingesetzt wird, und zwar in einer ersten, ausgetauchten Drehposition;
- Figur 3: eine Seitenansicht, ähnlich der Figur 2, in der sich jedoch die Fahrzeugkarosserie mit dem Skid in einer Zwischenposition befindet;
- Figur 4: eine Seitenansicht, ähnlich den Figuren 2 und 3, in der sich jedoch die Fahrzeugkarosserie mit dem Skid in einer Tauchposition befindet.

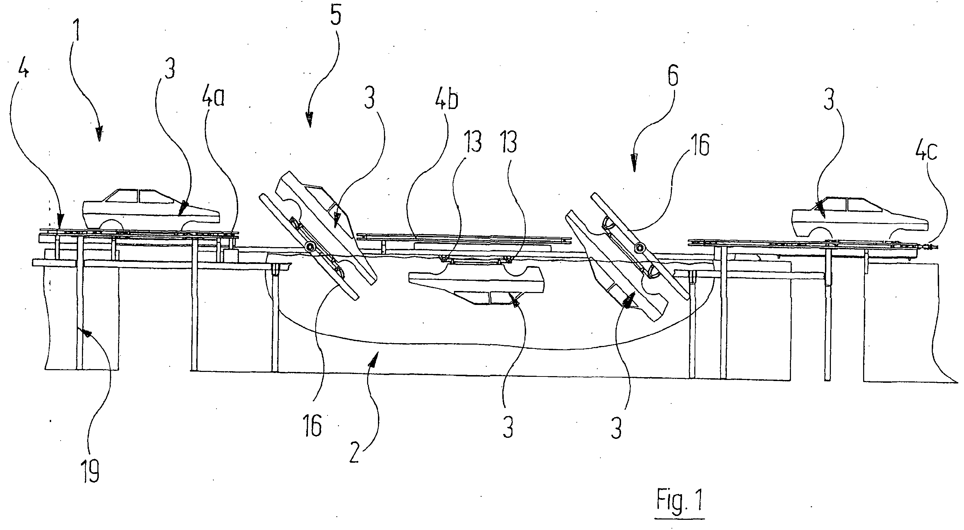

Die in Figur 1 ausschnittsweise dargestellte und insgesamt mit dem Bezugszeichen 1 gekennzeichnete Anlage zur kataphoretischen Tauchlackierung von Fahrzeugkarosserien ist als Beispiel für eine Anlage zur Tauchbehandlung von Fahrzeugkarosserien zu verstehen. Sie weist als Hauptbestandteil ein Tauchbecken 2 auf, das im betriebsbereiten Zustand bis zu einer bestimmten Höhe mit Lack angefüllt ist. Die zu lackierenden Fahrzeugkarosserien 3 werden mit Hilfe eines Transportsystemes 4 in Figur 1 von links nach rechts durch die Anlage 1 hindurchgeführt. Es ist durch zwei stationäre Drehstationen 5, 6 unterbrochen, so dass es also einen Einlaufabschnitt 4a, einen Zwischenabschnitt 4b und einen Auslaufabschnitt 4c des Transportsystems 4 im Bereich des Tauchbeckens 2 gibt.

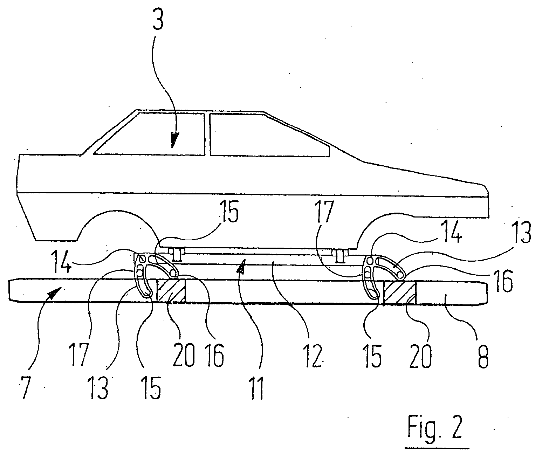

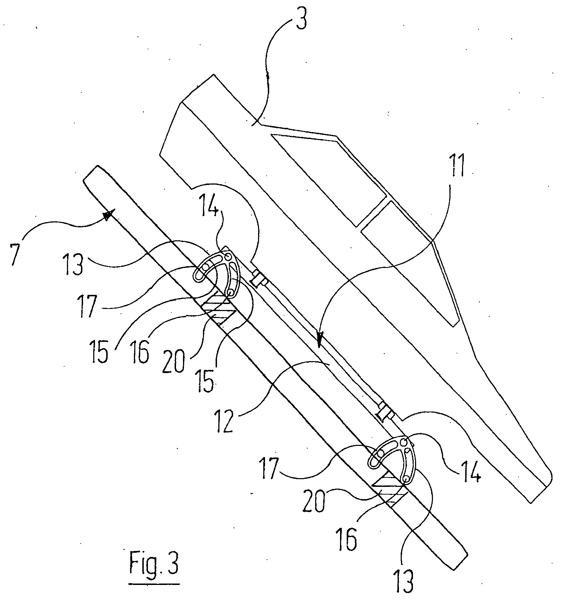

Die Fahrzeugkarosserien 3 werden durch die gesamte Anlage auf dem Transportsystem 4 mit Hilfe von Halterungsgestellen 7, sogenannten "Skids" geführt, wie sie schematisch in den Figuren 2 und 3 dargestellt sind. Skids als solche sind zum Transport von Fahrzeugkarosserien bekannt. Sie zeichnen sich generell dadurch aus, dass sie zwei an einem Grundgerüst 20 befestigte parallele Kufen 8 aufweisen, von denen in den Figuren 2 bis 4 nur die dem Betrachter abgewandte Kufe 8 sichtbar ist; die zweite hierzu parallele Kufe 8 ist aus Darstellungsgründen abgenommen. Die Kufen 8 wirken in außerhalb der hier beschriebenen Anlage 1 befindlichen Bereichen der Automobilfertigung mit einem bekannten Fördersystem, häufig mit Rollenfördersystemen, zusammen. Damit der hier beschriebene Skid 7 auch in diesen anderen Bereichen eingesetzt werden kann, besitzt er ebenfalls solche Kufen 8.

Während an bekannten Skids 7 die Fahrzeugkarosserien 3 starr befestigt sind, sich also insbesondere gegenüber den Kufen 8 und dem diese verbindenen Grundgerüst 20 nicht bewegen können, besitzt der hier dargestellte Skid 7 eine Befestigungseinrichtung 11, welche sich gegenüber dem die Kufen 8 tragenden Grundgerüst 20 bewegen kann. Die Befestigungseinrichtung 11 umfasst einen rechteckigen Rahmen 12, der eine Haltestruktur bildet, auf welcher die Fahrzeugkarosserie 3 in bekannter Weise mit üblichen Befestigungsmitteln befestigt werden kann.

Der Rahmen 12 ist über vier Schwingen 13 mit dem Grundgerüst 20 des Skids 7 verbunden. Zwei dieser Schwingen 13 sind am in Bewegungsrichtung nachlaufenden Ende des Rahmens 12 gelenkig angebracht; zwei weitere dieser Schwingen 13 sind in ähnlicher Weise gelenkig an dem in Bewegungsrichtung vorauseilenden Bereich des Rahmens 12 angeordnet. In den Figuren 2 und 3 ist jeweils nur die dem Betrachter abgewandte Schwinge 13 jeden Paares dargestellt; die jeweils zweite Schwinge 13 der Paare ist erneut aus Gründen der Darstellung abgenommen.

Die Schwingen 13 besitzen die grobe Form eines Hufeisens oder U, wobei die beiden Schenkel des Hufeisens bzw. U in der Mitte unter einem Winkel aneinander anstoßen. Im Bereich der Mitte der Schwingen 13, im Scheitel, werden sie von einem Gelenkzapfen 14 durchstoßen, mit dessen Hilfe sie an dem Rahmen 12 gelenkig angebracht sind.

In beiden Schenkeln der Schwingen 13 ist jeweils ein gekrümmtes Langloch 15 ausgebildet. In jedes der beiden Langlöcher 15 greift ein Führungszapfen 16 bzw. 17 ein, der am Grundgerüst 20 oder an einer Kufe 8 des Skids 7 befestigt ist.

Der genaue Aufbau der beiden Drehstationen 5, 6 ist im vorliegenden Zusammenhang von untergeordneter Bedeutung. Es genügt zu wissen, dass sie eine Drehplattform 16 besitzen, die mit geeigneten Führungen für die Skids 7 versehen sind. Beispielsweise können an den Außenseiten der Kufen 8 der Skids Führungsrollen angeordnet sein, die in Führungsschienen der Drehplattform 16 verfahren werden können.

Die beiden Drehplattformen 16 können mit Hilfe von Getriebemotoren (nicht dargestellt) in Drehung versetzt werden.

Die Abschnitte 4a, 4b und 4c des Transportsystemes 4 sind als herkömmliche Rollenbahnförderer ausgebildet. Die Bewegung der Fahrzeugkarosserien 3 auf die Drehplattformen 16 bzw. von diesen weg wird mit Hilfe eines hier nicht im Einzelnen dargestellten Schiebemechanismus bewirkt, der mit Ketten-angetriebenen Mitnehmern an den Skids 7 angreift.

Die Funktionsweise der oben beschriebenen Anlage 1 ist wie folgt:
Die zu lackierenden Fahrzeugkarosserien 3 werden mit Hilfe des Einlaufabschnittes 4a des Transportsystems 4 in Figur 1 von links kommend zugefördert. Sie sind dabei auf der Befestigungseinrichtung 11, genauer auf dem Rahmen 12, montiert. Die Schwingen 13 befinden sich in der in Figur 2 dargestellten Position, in welcher die "Spitze" des Hufeisens bzw. U nach links oben zeigt. In dieser Position der Schwingen 13 befindet sich der eine Führungszapfen 16 im oberen Bereich des Langloches 15 des linken Schenkels der Schwinge 13, während der zweite Führungszapfen 16 sich im unteren Bereich des Langlochs 15 des rechten Schenkels der Schwinge 13 befindet.

Die Fahrzeugkarosserie 3 hat hier eine stabile Lage, da sie gegen eine weitere Verschwenkung in Figur 2 gegen den Uhrzeigersinn, welche die Schwerkraft durchzuführen sucht, durch den mechanischen Anschlag zwischen den Führungszapfen 16 und 17 und den Langlöchern 15 gesichert ist. Einer Verschwenkung der Schwingen 13 im Uhrzeigersinn wirkt das Gewicht der Fahrzeugkarosserie 3 und des Rahmens 12 entgegen, da hierzu diese Teile zunächst etwas angehoben werden müssen.

In der ausgetauchten Position der Figur 2 besitzt die Fahrzeugkarosserie 3 einen verhältnismäßig kleinen Abstand von dem Skid 7, so dass die Fahrzeugkarosserien 3 in geringer Höhe über dem Transportsystem 4 befördert werden.

Wenn die Fahrzeugkarosserien 3 in den Bereich der ersten Drehstation 5 gelangen, übernimmt das oben erwähnte jedoch nicht dargestellte Schiebesystem den Weitertransport des die Fahrzeugkarosserie 3 tragende Skids 7 und schiebt diesen auf die Drehplattform 16 dieser Drehstation 5. Dabei werden die Kufen 8 des Skids 7 in der oben schon angedeuteten Weise an der Drehplattform 16 geführt. Der aufgeschobene Skid 7 wird in geeigneter Weise an der Drehplattform 16 verriegelt.

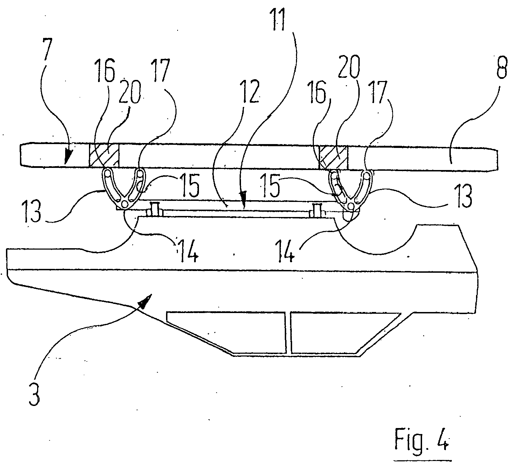

Nunmehr werden die Getriebemotoren bestromt, so dass sich die Drehplattform 16 der Drehstation 5 zu drehen beginnt und zwar im Uhrzeigersinn. Sie durchläuft dabei einen Winkel von 180°. Im Verlauf dieser Bewegung kommt ein Moment, in welchem die Gelenkzapfen 14 praktisch senkrecht über den Führungszapfen 16 stehen. Diese Situation ist in Figur 3 dargestellt. Bei der Verdrehung der Drehplattform 16 und des Skids 7 verschwenkt die Fahrzeugkarosserie 3 mit dem Rahmen 12 die Schwingen 13. Dabei gleiten die Führungszapfen 16, 17 in den entsprechenden Langlöchern 15 der Schenkel der Schwingen 13. Nach Drehung der Drehplattform 16 und damit der Fahrzeugkarosserie 3 um 180° wird die in Figur 4 dargestellte Position erreicht, in welcher die Scheitel der Schwingen 13 nach unten zeigen. Die Führungszapfen 17 haben nunmehr dasjenige Ende des zugehörigen Langloches 15 erreicht, welches seiner Ausgangsposition entgegengesetzt ist.

In der Figur 4 dargestellten Position erreicht der Rahmen 12 der Befestigungseinrichtung 11 mit der daran befestigten Fahrzeugkarosserie 3 den maximalen Abstand von dem Grundgerüst 20 des Skids 7. Vergleicht man die Figur 2, in welcher der Drehwinkel 0° ist, mit der Figur 4, in welcher der Drehwinkel 180° ist, so erkennt man, dass die nicht eingetauchte Fahrzeugkarosserie 3 (0°) einen sehr viel geringeren Abstand in vertikaler Richtung von dem Skid 7 und damit auch von der Drehplattform 16 aufweist, als in voll eingetauchtem Zustand (180°).

In der eingetauchten Position (Drehwinkel 180°) kann die Fahrzeugkarosserie 3 je nach Wunsch eine gewisse Zeit verharren. Früher oder später wird sie und der sie tragende Skid 7 mit Hilfe eines ähnlichen Schiebemechanismus in hängender Position auf den Zwischenabschnitt 4b des Transportsystems 4 geschoben. Dort wird sie nun in konventioneller Weise weiterbewegt, wobei sie sich durch den im Tauchbecken 2 befindlichen Lack bewegt. Aufgrund der Viskosität dieses Lackes können sich die Schwingen 13 dann etwas schräg stellen.

Hat die Fahrzeugkarosserie 3 in dieser hängenden Position den Zwischenabschnitt 4b des Transportsystems 4 durchquert, wird sie erneut mit Hilfe eines Schiebemechanismus auf die Drehplattform 16 der zweiten Drehstation 6 geschoben. Deren Drehplattform 16 wird nunmehr mit Hilfe der zugehörigen Getriebemotoren in Drehung versetzt und zwar vorzugsweise gleichsinnig zur Drehung in der ersten Drehstation 5, also im Uhrzeigersinn. Grundsätzlich wäre es aber auch denkbar, die Drehbewegung beim Austauchen der Fahrzeugkarosserie 3 in der entgegengesetzten Drehrichtung vorzunehmen wie das Eintauchen.

Hat dann die Fahrzeugkarosserie 3 wieder ihre ausgetauchte, im Wesentlichen horizontale Lage auf der Drehplattform 16 der zweiten Drehstation 6 erreicht, so kann sie mit Hilfe eines weiteren, nicht dargestellten Schiebemechanismus auf den Auslaufabschnitt 4c des Transportsystems 4 geschoben und dort in herkömmlicher Weise transportiert werdem.

Dem beschriebenen Ausschnitt einer Tauchlackieranlage 1 können verschiedene andere Bearbeitungsstationen vor- und nachgeschaltet sein, die ebenfalls mit bestimmten Behandlungsflüssigkeiten gefüllte Tauchbecken aufweisen und durch welche die Fahrzeugkarosserien 3 in derselben Weise geführt werden, wie dies oben für das kataphoretische Tauchbad beschrieben wurde.

## Patentansprüche

1. Anlage (1) zur Tauchbehandlung von Gegenständen (3), insbesondere von Fahrzeugkarosserien, mit
a) mindestens einem Tauchbecken (2), das bis zu einem bestimmten Spiegel mit einer Behandlungsflüssigkeit befüllbar ist;
b) einem Transportsystem (4), welches die Gegenstände (3) an das Tauchbecken heran und von diesem wegbewegt;
c) mindestens einer stationären Drehstation (5, 6), die an dem Tauchbecken vorgesehen ist und eine Drehplattform (16) aufweist, auf welcher jeweils mindestens ein Gegenstand (3) befestigbar ist und die von einer ersten Position, in welcher sich der Gegenstand oberhalb des Spiegels der Behandlungsflüssigkeit befindet, in eine zweite Position, in welcher sich der Gegenstand unterhalb des Spiegels der Behandlungsflüssigkeit befindet, und/oder in der Gegenrichtung zwischen diesen beiden Positionen verdrehbar ist;
wobei
d) jeder Gegenstand (3) auf einem Skid (7) befestigbar ist, der mit dem Transportsystem (4) zusammenwirkt und auf der Drehplattform (16) der Drehstation (5, 6) festlegbar ist, wobei der Skid ein Grundgerüst (20) und eine Befestigungseinrichtung (11) für den Gegenstand aufweist;
**dadurch gekennzeichnet, dass**
e) die Befestigungseinrichtung (11) eine Haltestruktur (12) für den Gegenstand (3) aufweist sowie mindestens zwei Schwingen (13), welche die Gestalt eines U oder V besitzen und in ihrem Scheitel an der Haltestruktur (12) verschwenkbar befestigt sind;
wobei
f) beide Schenkel des U oder V ein Langloch (15) aufweisen, in das jeweils ein an dem Skid (7) befestigter Führungszapfen (16, 17) eingreift und bei einer Drehung des Skids (7) in dem entsprechenden Langloch (15) gleitet.

2. Anlage nach Anspruch 1, **dadurch gekennzeichnet,**
**dass** die Befestigungseinrichtung (11) eine Dämpfungseinrichtung aufweist, welche die unter dem Einfluss der Schwerkraft stattfindende Bewegung des Gegenstandes (3) gegenüber dem Skid (7) bremst.

## Claims

1. An installation (1) for immersion treating objects (3), in particular vehicle bodies, having
a) at least one immersion tank (2), which can be filled to a certain level with a treatment fluid;
b) a transport system (4), which moves the objects (3) towards the immersion tank and away from this;
c) at least one stationary rotary station (5, 6), which is provided on the immersion tank and has a rotary platform (16) on which at least one object (3) can be fastened in each case and which can be rotated from a first position, in which the object is located above the level of the treatment fluid, into a second position, in which the object is located below the level of the treatment fluid, and/or in the opposite direction between these two positions;
wherein
d) each object (3) can be fastened to a skid (7), which cooperates with the transport system (4) and can be fixed on the rotary platform (16) of the rotary station (5, 6), wherein the skid has a base structure (20) and a fastening device (11) for the object;
**characterised in that**
e) the fastening device (11) has a holding structure (12) for the object (3) and at least two rockers (13), which are in the shape of a U or a V and are fastened in pivotable manner to the holding structure (12) at their vertex;
wherein
f) both limbs of the U or V have a slot (15) in which a guide pin (16, 17) which is fastened to the skid (7) engages in each case and slides in the corresponding slot (15) upon a rotation of the skid (7).

2. An installation according to Claim 1, **characterised in that** the fastening device (11) has a damping device which brakes the gravity-induced movement of the object (3) with respect to the skid (7).

## Revendications

1. Installation (1) de traitement, par immersion, d'objets (3) se présentant notamment comme des carrosseries de véhicules, comprenant
a) au moins une cuve d'immersion (2), pouvant être emplie d'un liquide de traitement jusqu'à un niveau déterminé ;
b) un système de convoyage (4) qui rapproche lesdits objets (3) de ladite cuve d'immersion, et les éloigne de cette dernière ;
c) au moins un poste rotatif fixe (5, 6), prévu sur ladite cuve d'immersion et muni d'une plate-forme tournante (16) sur laquelle au moins un objet (3) peut être respectivement fixé, et qui peut être animée d'une rotation d'un premier emplacement, auquel l'objet se trouve au-dessus du niveau du liquide de traitement, à un second emplacement auquel ledit objet se trouve au-dessous dudit niveau du liquide de traitement, et/ou dans la direction opposée entre ces deux emplacement ;
sachant que
d) chaque objet (3) peut être fixé sur un chevalet de transport (7) qui coopère avec le système de convoyage (4) et peut être verrouillé à demeure sur la plate-forme tournante (16) du poste rotatif (5, 6), ledit chevalet de transport comportant une ossature de base (20) et un dispositif de fixation (11) dévolu à l'objet ;
**caractérisée par le fait que**
e) le dispositif de fixation (11) est pourvu d'une structure de retenue (12) dédiée à l'objet (3), ainsi que d'au moins deux ailes (13) qui revêtent la forme d'un U ou d'un V et sont fixées en leur sommet à ladite structure de retenue (12), de manière pivotante ;
sachant que
f) les deux branches du U ou du V présentent un trou oblong (15) dans lequel un tenon de guidage (16, 17), fixé au chevalet de transport (7), pénètre à chaque fois et effectue, lors d'une rotation dudit chevalet de transport (7), un glissement dans le trou oblong (15) correspondant.

2. Installation selon la revendication 1, **caractérisée par le fait que** le dispositif de fixation (11) présente un dispositif d'amortissement qui freine le mouvement de l'objet (3) par rapport au chevalet de transport (7), s'opérant sous l'effet de la gravité.
